# EUROPEAN PATENT SPECIFICATION

(11) **EP 3 876 051 B1**
(45) Date of publication and mention of the grant of the patent: **02.08.2023**
(21) Application number: 20382159.0
(22) Date of filing: 05.03.2020
(51) Int. Cl.: G05B 19/414, G05B 19/418, H04L 12/40, G06F 13/40, G06F 13/42

(54) **A PRINTING SYSTEM AND A FIELD DEVICE CONTROL UNIT FOR A PRINTING SYSTEM**
DRUCKSYSTEM UND FELDVORRICHTUNGSSTEUEREINHEIT FÜR EIN DRUCKSYSTEM
SYSTÈME D'IMPRESSION ET UNITÉ DE COMMANDE DE DISPOSITIF DE TERRAIN POUR UN SYSTÈME D'IMPRESSION

(43) Date of publication of application: 08.09.2021
(73) Proprietor: UNITED BARCODE SYSTEMS, S.L., 08340 Vilassar de Mar (ES)
(72) Inventor: BONET LOZANO, Antoni Maria, 08340 VILASSAR DE MAR (ES)
(74) Representative: Ponti & Partners, S.L.P

(56) References cited:
- US-A1- 2006 267 537
- US-A1- 2019 352 035
- US-B1- 6 483 317
- US-B2- 6 532 508

## Description

### FIELD OF THE INVENTION

The present invention relates, in a first aspect, to a printing system comprising a distributed control system, and more particularly to a printing system allowing real-time communication between their components and a high adaptability to different types of field devices.

In a second aspect, the present invention relates to a field device control unit adapted to operate for the printing system of the first aspect of the invention.

### BACKGROUND OF THE INVENTION

A printing system consists of a control unit or print engine that controls a printing head of one of several existing technologies, such as inkjet, thermal transfer, laser, etc., generally with a high speed connection with a PC or Central Processing Unit that generates the information to be printed.

Depending on the technology, it can also incorporate a UV solidification or curing system, an ink supply hydraulic system, cameras or detectors for printing validation, light or acoustic indicators of the system status, control input lines, lines of control output, object speed detectors, etc.

If the printing system is a compact element that incorporates all of the above mentioned components, the solution is quite simple. The interconnections are fixed and many times several elements or all of them coexist on the same electronic board. Likewise, the power supply is also fixed and known.

But in an industrial environment, things get complicated. The size of the components of the printing system is so large that a compact solution is not possible. It may also be necessary for the various components to be distributed and at some distance from each other, complicating their interconnection and, sometimes, forcing them not to be separated from one another or to duplicate certain functions.

There are different solutions to interconnect those components, even over great distances. These are the so-called fieldbuses: CAN, Modbus, Profibus, Ethernet Powerlink, etc. but the connections provided by those fieldbuses only allow data to be exchanged asynchronously, that is, a certain time passes between the origin of the request and the response of the system to it. For many control functions this is sufficient, but others need immediate response times, or synchronous communication. Some of these functions can be analog variables, reference clocks or events that launch processes synchronously.

Also, for these problems there are solutions such as 0-20 mA or 4-20 mA analog current loops, IEEE1588, but all of them, including the known fieldbuses, require dedicated, expensive and different special hardware for each of them. Some components may need to be powered by the bus itself, sometimes with different voltage values.

The installation of additional components can be complex and require special configurations.

Printing systems comprising the features of the preamble of claim 4 are known in the art, i.e. a printing system comprising:
- a printing head configured and arranged to print on a substrate as part of a printing process,
- at least one field device configured and arranged to perform a further task of said printing process; and
- a distributed control system comprising:
   - a printer control unit with computing capabilities, that is operatively connected to said printing head to control the operation thereof;
   - at least one field device control unit with computing capabilities, that is operatively connected to said at least one field device to control at least part of the operation thereof; and
   - a fieldbus interconnecting at least said printer control unit and said at least one field device control unit, wherein said fieldbus (B) provides a real-time communication between said printer control unit (PE) and said at least one field device control unit (C).

Particularly, US2019352035A discloses such a printing system and corresponding field device control unit. However, each field device (individual machines or transport devices) needs to be connected to its own dedicated hardware, i.e. to its own specific field device control unit (control device).

Therefore, those known printing systems have the above mentioned drawbacks associated to the inclusion of prior art fieldbuses and/or of the need of different special dedicated hardware.

It is, therefore, necessary to provide an alternative to the state of the art which covers the gaps found therein, by providing a printing system and field device control unit, which do not have the above mentioned drawbacks of the proposals of the prior art, and which particularly allows the implementation of any of the above mentioned functions without needing different special dedicated hardware.

### SUMMARY OF THE INVENTION

To that end, the present invention relates, in a first aspect, to a printing system as recited in claim 4, comprising:
- a printing head configured and arranged to print on a substrate as part of a printing process,
- at least one field device configured and arranged to perform a further task of said printing process; and
- a distributed control system comprising:
   - a printer control unit with computing capabilities, that is operatively connected to said printing head to control the operation thereof;
   - at least one field device control unit with computing capabilities, that is operatively connected to said at least one field device to control at least part of the operation thereof; and
   - a fieldbus interconnecting at least said printer control unit and said at least one field device control unit, wherein the fieldbus provides a real-time communication between the printer control unit and the at least one field device control unit.

In the printing system of the first aspect of then present invention, in a characteristic manner, the at least one field device control unit is adapted to be operatively connected, in an interchangeable manner, to each of a plurality of field devices, each configured and arranged to perform a distinct task of said printing process, said plurality of field devices including the above mentioned at least one field device.

Depending on the embodiment, the plurality of field devices comprises at least two of the following field devices: a UV solidification or curing device, an ink supply hydraulic device, a camera or detector for printing validation and/or for detecting the presence of a predetermined to-be-printed area of the substrate, a light or acoustic indicator of the system status, a control input line device, a control output line device, a moving object speed and/or direction detector, a machine readable code reader device, a conveyor start/stop switch status device, and a PLC.

Generally, the printing system of the first aspect of the present invention comprises two or more field devices of the above mentioned at least one field device and two or more respective field device control units of the above mentioned at least one field device control unit.

The fieldbus interconnects the printer control unit and the at least one field device control unit or two or more field device control units, according to a ring topology, for an embodiment, or according to a bus topology, for another embodiment.

For a preferred embodiment, the fieldbus comprises the following wire pairs:
- a first pair, for power supplying at least the at least one field device control unit or the two or more field device control units;
- a second pair, for bidirectional data serial communication between the different components operatively connected to the fieldbus, including the printer control unit and the at least one field device control unit or the two or more field device control units;
- a third pair, for providing a synchronism signal to the different components operatively connected to the fieldbus, including the printer control unit and the at least one field device control unit or the two or more field device control units, to synchronize the operations thereof; and
- a fourth pair, for providing said real-time communication by means of a real-time bidirectional transmission of electrical signals representative of real-time events associated to any of the printer control unit, the at least one field device control unit or the two or more field device control units.

According to an embodiment, the fieldbus further comprises a fifth wire pair, for bidirectional data communication with further field devices, or with a further printer control unit connected to the same fieldbus or to a further fieldbus to synchronize the operation of the printing heads and field devices operatively connected to the fieldbus or fieldbuses, for carrying out a common printing process or individual but synchronized printing processes.

The fourth pair of the field bus is preferably configured and arranged for the multiplexed transmission of several of the above mentioned electrical signals corresponding to different real-time events.

According to an embodiment, the printer control unit is configured and arranged to identify, from information sent and received through the fieldbus second pair to/from any of the at least one field device control unit or of the two or more field device control units, a specific field device operatively connected thereto.

For an implementation of said embodiment, the printer control unit is configured and arranged to transmit, through the fieldbus second pair, program instructions data to any of the at least one field device control unit or of the two or more field device control units, to program or re-program the same to adapt its operation to the identified field device operatively connected thereto.

For another implementation of the above mentioned embodiment, the printer control unit is configured and arranged to transmit, through the fieldbus second pair, different types of data to any of the at least one field device control unit or of the two or more field device control units, to at least one of:
- assigning an identifier to the same,
- configuring the same for operating, for the real-time bidirectional transmission through the fieldbus fourth pair or for the provision of said synchronism signal through the third pair, and the associated synchronized components operations, as a master or as a slave, depending on which kind of field device is the identified field device, and
- power supplying, through the fieldbus first pair, a field device control unit connected downstream to the fieldbus, from the power supply received from the printer control unit, also from the fieldbus first pair.

For some embodiments, a further computer entity is connected to the printer control unit to exchange data therewith and provide the same with printing jobs to be processed by the printing system to carry out a printing process. Preferably, that computer entity is provided with a HMI (Human-Machine Interface) to allow an operator to interact with the same.

For an embodiment, the substrate is a moving object, and the printer control unit is configured and arranged to configure as a master the field device control unit to which the identified field device is operatively connected and as slaves the rest of components operatively connected to the fieldbus, for the provision of the synchronism signal through the fieldbus third pair and associated synchronized components operations, when the identified field device is a detector arranged for detecting the moving object speed and direction, such as an encoder.

According to another embodiment, the printer control unit is configured and arranged to configure as a master the field device control unit to which the identified field device is operatively connected, for the real-time bidirectional transmission through the fieldbus fourth pair, when the identified field device is a detector, such as a photocell, arranged for printing validation and/or for detecting the presence of a predetermined to-be-printed area of the substrate.

The printing system of the first aspect of the present invention provides, therefore, a distributed control system based on a multiple bus, or several buses in one, with a cable with four, or preferably five, wire pairs, and programmable and configurable interconnection bases (field device control units), to which the different accessories or satellites (field devices), of the system are connected.

The interconnection base serves as a repeater for the fieldbus, as an identifier of the field device(s) connected to said base, as a power supply for the field device(s) that requires it, as a data collector for the fieldbus and for control and execution of orders that come through the fieldbus. Each base is preferably reprogrammable in the field through the same fieldbus or locally from the base itself.

A second aspect of the present invention relates to a field device control unit as recited in claim 1, for a printing system, wherein the field device control unit is defined as the at least one field device control unit of the printing system of the first aspect of the present invention.

For an embodiment, the field device control unit of the second aspect of the present invention comprises:
- first and second bus ports configured and arranged for operatively connecting the field device control unit to the fieldbus, the first bus port to a fieldbus segment coming from the printer control unit or from an upstream field device control unit and the second bus port to a fieldbus segment going to a downstream field device control unit;
- field device ports configured and arranged for operatively connecting the field device control unit, in an interchangeable manner, to each of the above mentioned plurality of field devices; and
- processing means operatively connected to the first and second bus ports and the field device ports, and programmed to process data coming therefrom in a manner which follows program instructions and at least depends on the kind of field device operatively connected to the field device ports.

For an implementation of that embodiment, the processing means are adapted:
- to identify the field device operatively connected to the field device ports, automatically or with the collaboration of the printer control unit, and
- to re-program its program instructions to adapt its operation to the identified field device operatively connected thereto, the processing means being adapted to carry out said re-programming automatically or with the collaboration of the printer control unit or of another computing entity or interface connected to the field device control unit.

In another aspect, the present invention relates to a method adapted to perform a printing process by carrying out the operation steps of the printing system of the present invention, for any of its embodiments.

### BRIEF DESCRIPTION OF THE FIGURES

In the following some preferred embodiments of the invention will be described with reference to the enclosed Figures. They are provided only for illustration purposes without however limiting the scope of the invention.
Figure 1 schematically shows the printing system of the first aspect of the present invention for an embodiment for which the different components thereof are interconnected to the fieldbus according to a bus topology.
Figure 2 schematically shows the field device control unit of the second aspect of the present invention, for an embodiment.

### DESCRIPTION OF THE PREFERRED EMBODIMENTS

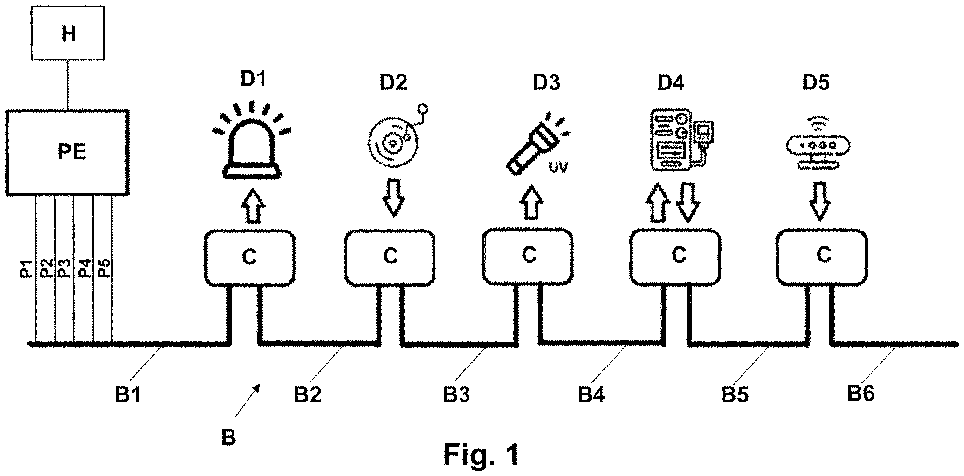

For the embodiment illustrated in Figure 1, the printing system of the first aspect of the present invention comprises:
- a printing head H configured and arranged to print on a substrate (not shown) as part of a printing process;
- five field devices D1-D5 configured and arranged to perform a further task of the printing process, particularly a light indicator D1, an encoder D2, a UV lamp D3, a PLC D4, and a detector D5; and
- a distributed control system comprising:
   - a printer control unit PE with computing capabilities, that is operatively connected to the printing head H to control the operation thereof;
   - five field device control units C with computing capabilities, each operatively connected to a respective field device D1-D5 to control at least part of the operation thereof; and
   - a fieldbus B interconnecting the printer control unit PE and field device control units C, in this case according to a bus topology.

The fieldbus B provides a real-time communication between the printer control unit PE and the field device control units C, each of which is adapted to be operatively connected, in an interchangeable manner, to each of the field devices D1-D5.

Although five specific field devices D1-D5 are depicted in Figure 1, less of more of those or of other kind of field devices can be included in the printing system for other embodiments, depending on the specific printing process to be implemented by the system.

For the illustrated embodiment, the fieldbus B comprises the following wire pairs:
- a first pair P1, for power supplying the field device control units C, with power obtained from the printer control unit PE, preferably with current limitation and a sufficient magnitude to power both the field device control units C and the field devices D1-D5 connected to them (provided they are low power consumption devices);
- a second pair P2, or data bus, for bidirectional data serial communication between the different components operatively connected to the fieldbus B, i.e. the printer control unit PE and the field device control units C. This pair is preferably a 485 differential pair to ensure robustness in the industrial environment, with sufficient length and high transmission speed. Through this data bus, the field device control unit C will be programmed (when not programmed locally from the field device control unit C itself), the field device control unit C will be identified and orders, configurations and data will be exchanged between the printer control unit PE and the field device control units C of the system;
- a third pair P3, for providing a synchronism/clock signal to the different components operatively connected to the fieldbus B, i.e. the printer control unit PE and the field device control units C, to synchronize the operations thereof. The synchronism/clock signal can come from the printer control unit PE or from a filed device control unit C or field device D1-D5, such as an encoder. This pair is preferably a 485 differential pair;
- a fourth pair P4, for providing the above mentioned real-time communication by means of a real-time bidirectional transmission of several time-multiplexed electrical signals corresponding to different real-time events associated to the printer control unit PE and/or the field device control units C. If this multiplexing is done, for example, at 12 Mbps, the printing system can capture an event with a delay of 0.83 µs, which in practice can be considered real time. This pair is preferably a 485 differential pair; and
- a fifth wire pair P5, or auxiliary data bus, for bidirectional data communication with further field devices, such as additional components (WiFi mode, cameras, etc.), or with a further printer control unit PE connected to the same fieldbus B or to a further fieldbus (not shown) to synchronize the operation of the printing heads and field devices operatively connected to the fieldbus B or to different fieldbuses, for carrying out a common synchronized printing process or individual but synchronized printing processes, synchronizing different fieldbuses or generate sophisticated printing blocks. This pair is preferably a 485 differential pair.

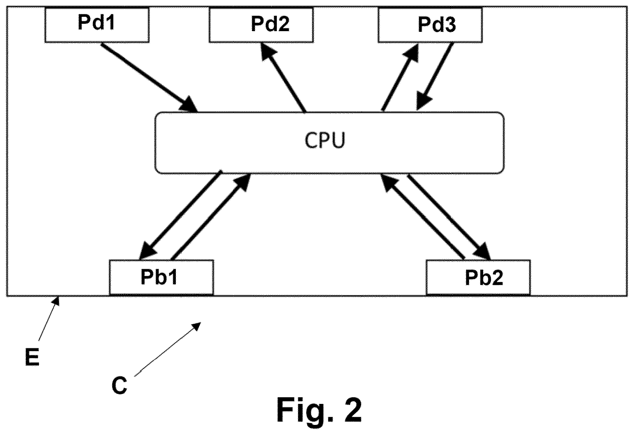

The field device control unit C depicted in Figure 2 corresponds to both the one of the second aspect of the present invention and also the one of the printing system of the first aspect of the present invention, and is described with more detail below.

As shown in Figure 2, the field device control unit C comprises first Pb1 and second Pb2 bus ports configured and arranged for operatively connecting the field device control unit C to the fieldbus B, the first bus port Pb1 to a fieldbus segment B1-B5 coming from the printer control unit PE (for the unit C connected to D1) or from an upstream field device control unit C (for the rest of field device control units C) and the second bus port Pb2 to a fieldbus segment B2-B6 going to a downstream field device control unit C.

The field device control unit C further comprises:
- field device ports Pd1, Pd2, Pd3 configured and arranged for operatively connecting the field device control unit C, in an interchangeable manner, to each of the plurality of field devices D1-D5; and
- processing means CPU operatively connected to the first Pb1 and second Pb2 bus ports and to the field device ports Pd1, Pd2, Pd3, and programmed to process data coming therefrom in a manner which follows program instructions and at least depends on the kind of field device D1-D5 operatively connected to the field device ports Pd1, Pd2, Pd3.

For an embodiment, the processing means CPU are adapted:
- to identify the field device D1-D5 operatively connected to the field device ports D1-D5, automatically or with the collaboration of the printer control unit PE, and
- to re-program its program instructions to adapt its operation to the identified field device D1-D5 operatively connected thereto, the processing means CPU being adapted to carry out said re-programing automatically or with the collaboration of the printer control unit PE or of another computing entity or interface connected to the field device control unit C.

Preferably, ports Pb1 and Pb2 are implemented by a type of connector which is different to the type of connector(s) implementing ports Pd1, Pd2, Pd3, in order to avoid connection errors, i.e. to avoid connecting a field device D1-D5 to ports Pb1 and Pb2 or a field bus segment B1-B6 to ports Pd1, Pd2, Pd3.

All connectors are preferably suitable for the industrial environment, with secure connection and symmetrical, that is, it does not matter how they are connected between field device control units C and with the printer control unit PE.

For the illustrated embodiment (as indicated by the depicted arrow lines), port Pd1 is an input port, port Pd2 is an output port, and ports Pd3, Pb1, and Pb2 are input/output ports.

Generally, the processing means CPU are implemented by means of a microprocessor, and associated circuitry and electronic components, arranged on a printed circuit board.

Although not shown, in addition to the processing means CPU, for some embodiments, the field device control unit C further comprises electric and/or electronic circuitry in charge of carrying out complementary functions, such as signal conditioning, arranged whether on the above mentioned printed circuit board or in another one.

The illustrated field device control unit C comprises an enclosure E housing within the different components thereof, and through openings for accessing each of its ports, i.e. Pb1, Pb2, Pd1, Pd2, Pd3, so that they can be connected to the fieldbus B and one field device D1-D5.

Depending on how it is programmed, the field device control unit C can act, with respect to the information, data or signals flowing through the fieldbus B, as a bypass, repeater, passive, or active unit for each, for all or for any of the pairs that make up the fieldbus B. In this manner, different master/slave type connections can be created, independently for each of the second, third, fourth and fifth pair, i.e. for any of those pairs the printer control unit PE or any of the field device control units C can act as master while the rest of components connected to the fieldbus B act as slaves, and for another pair another of those components can act as a master and the rest as slaves. Also, the field device control unit C can cut or allow the passage of power supply to the rest of components connected to the fieldbus B.

The input-output part of the field device control unit C, i.e. that constituted by ports Pd1, Pd2 and Pd3, is configured to connect any of the different field devices already mentioned herein, i.e. UV lamp, detectors, encoder, light or acoustic indicators/beacons, PLC, cameras, etc.

This field device control unit C can be programmed in-factory, it can be reconfigured in the field and can even automatically identify the field device connected to it.

The mode of operation is simple, as explained below:
When starting the printing system, the printer control unit PE acts as a master and power supplies the first connected field device control unit C, recognizes and identifies the field device connected thereto, configures the field device control unit C and instructs it to open the power supply (cut off at the beginning) to the next field device control unit C, repeating the process until there are no more elements in the chain, i.e. no more device control units C connected to the fieldbus B. Once all the field device control units C are configured, the master-slave roles are reassigned according to the programmed configuration. If a new field device is added, it will be recognized and the field device control unit C connected thereto configured as the previous ones, being immediately integrated into the printing system.

The incorporation of a new field device not foreseen in the implemented printing scheme will require only a small update of the recognition and configuration software included in the printing system, and follow the same procedure indicated for the rest of the previous field devices D1-D5 and associated field device control units C.

Therefore, the printing system is expandable without limitation, constituting a kind of plug-and-play system, where any filed device can be connected to any field device control unit and be automatically recognized and identified and thus integrated in the printing system.

The printing process implemented by the printing system of the present inventions is described with more detail below, for a specific embodiment.

For that specific embodiment, the printing system has a minimum configuration with a printing head H, its associated printer control unit PE, and connected to the fieldbus B, a signalling beacon D1, a photocell detector D5 and an encoder D2 as a speed detector element.

The components are interconnected to the fieldbus B as follows (the order may vary due to the needs of the production line): the printer control unit PE is connected to the signalling beacon D1, which is connected to the encoder D2 and the latter is connected to the photocell detector D5. I.e. a printing scheme as that shown in Figure 1 but without field devices D3 and D4.

The printer control unit PE power supplies the beacon D1, and the processing means CPU of the field device control unit C connected thereto communicates informing that the field device D1 is a signalling beacon. Then, the printer control unit PE assigns, to that field device D1 and field device control unit C, an identifier on the fieldbus B, recognizes it as a slave element and instructs it to allow the pass of power supply to the next component. From now on, the beacon D1 and associated field device control unit C will only respond when the communications package identifier matches the one assigned to it.

The power supply reaches the encoder D2 that still has no identifier assigned, so the printer control unit PE proceeds to interrogate the field device control unit C connected to the encoder D2 in order to recognize it. The printer control unit PE detects that the field device is an encoder D2, assigns it an identifier and in the third pair P3 the field device control unit C connected thereto is programmed as a master, becoming the rest of the components and even the same printer control unit PE slaves in that third pair P3. The field device control unit C connected to the encoder D2 is then instructed to enable the power supply to reach the next component and the process is repeated with the photocell detector D5.

Then, the printer control unit PE recognizes that the field device D5 is a photocell detector, configures the field device control unit C connected thereto as a master in the fourth pair P4, assigns the same a corresponding identifier in the fieldbus B and instructs the same to enable the power supply to reach a possible next component in the fieldbus B.

There are no more components connected to the fieldbus B, therefore, those already present have their function assigned and are perfectly identified.

After a while, in case a UV curing lamp had to be incorporated into the printing system, a further field device control unit C connected to that UV curing lamp would be connected to the fieldbus B, specifically to the last identified component, i.e. to the field device control unit C connected to the photocell detector D5, and the previous processes would be repeated, identifying and configuring the new component quickly, easily and without errors, and without the need to change the order or position of the components already existing in the printing system.

Alternatively, the new field device, such as that UV curing lamp, could be connected to a field device control unit C already connected to the fieldbus B, even if that was already connected to a field device, substituting the same with the new one, and/or to a field device control unit C to be connected at any point of the fieldbus B, no matter its position, i.e. not necessarily after the last identified component.

In the case that there are two or more printing heads H on the same printing line in order to print in colours, or increase the width of the printing area, then there will be several printer control units PEs that will have to be synchronized in some way. The auxiliary pair, i.e. the fifth pair P5, will be responsible for intercommunicating the different PEs and reprogramming their synchronous pairs, i.e. third pairs P3, so that they all share the same synchronization signal, and even the same detectors for the real-time pairs, i.e. fourth pairs P4.

### Real case:

For implementing a printing process, according to a real case implemented by the present inventors, a printer control unit is included that uses a rotary position encoder that generates a synchronization signal of up to 2 MHz, a signal that indicates the direction of rotation of the encoder, three or more signals that come from the printer control unit to generate warnings, alarms or status indicator light signals, two "real time" input signals to the printer control unit, that is, which must generate immediate response, two or more status signals from external elements, such as PLC, conveyor start-stop switch, etc., control signals of curing lamps, and barcode readers.

This mixture of signals of different speeds and that require varied response times cannot be integrated into a standard industrial bus due to its different characteristics.

The fieldbus B is capable of transporting all of them between the different components of the printing system of the present invention without using a hose of 25 wires or more. For the here described real case:
- There is a single 12 V supply from which the power supplies necessary for the rest of components can be extracted, through first pair P1.
- There is a differential pair, or second pair P2, providing a serial communication to a minimum of 115 Kbps that serves to:
   - Identify components connected to the fieldbus B;
   - Program those components;
   - Collect input status signals to the printer control unit;
   - Transport output signals to control alarms or light indicators, or orders to PLCs
   - Transmit data from smart devices such as barcode readers, etc.
- There is a differential pair, or third pair P3, that carries the speed synchronization signal obtained from a rotary speed encoder.
- There is a differential pair, or fourth pair P4, that transmits a periodic signal at high speed where the "real time" signals are introduced multiplexed. The "real time" consideration is given by the repetition rate of the data transmitted by this pair. If data is sent at 10 Mbps one can have a real value of the signal in question after 1 µs, which, for a photocell signal, for example, that marks the beginning of a printing operation, it would mean a response delay of 2 microns for a system that moves at a speed of 120 m/minute. So up to 8 signals can be sent at once. If an industrial bus at a speed of 115Kbps was used with very fast microprocessors and low latency in the response one could have a data as soon as 1 millisecond after the event, which at the speed indicated above would provide a response offset 2 mm after the occurrence of the detection. If the system could not respond to the event in 5 milliseconds the offset would be 10 mm. This is surely not feasible, that's the reason of the need of what has been called "real time" in this type of signals.

The connection of new devices is done in a controlled and cascading manner, avoiding that, as could happen in the case of connecting two speed encoders in the fieldbus B, the signal of one could distort that of the other. What will happen in this case is that this second encoder will not be power supplied avoiding a malfunction of the system or, even if the new encoder is power supplied, its signal will not be allowed to be incorporated into the fieldbus B to the corresponding pair.

A person skilled in the art could introduce changes and modifications in the embodiments described without departing from the scope of the invention as it is defined in the attached claims.

## Claims

1. A field device control unit for a printing system, wherein the field device control unit is defined as at least one field device control unit (C) with computing capabilities, that is configured to be operatively connected to at least one field device (D1-D5) to control at least part of the operation thereof, wherein the at least one field device control unit (C) is adapted to be operatively connected, in an interchangeable manner, to each of a plurality of field devices (D1-D5), each configured and arranged to perform a distinct task of a printing process, said plurality of field devices including said at least one field device (D1-D5);
wherein said printing system comprises:
- a printing head (H) configured and arranged to print on a substrate as part of a printing process,
- said at least one field device (D1-D5) configured and arranged to perform a further task of said printing process; and
- a distributed control system comprising:
- a printer control unit (PE) with computing capabilities, that is operatively connected to said printing head (H) to control the operation thereof;
- said at least one field device control unit (C) with computing capabilities, that is operatively connected to said at least one field device (D1-D5) to control at least part of the operation thereof; and
- a fieldbus (B) interconnecting at least said printer control unit (PE) and said at least one field device control unit (C), wherein said fieldbus (B) provides a real-time communication between said printer control unit (PE) and said at least one field device control unit (C).

2. The field device control unit according to claim 1, comprising:
- first (Pb1) and second (Pb2) bus ports configured and arranged for operatively connecting the field device control unit (C) to the fieldbus (B), said first bus port (Pb1) to a fieldbus segment (B1-B5) coming from the printer control unit (PE) or from an upstream field device control unit (C) and said second bus port (Pb2) to a fieldbus segment (B2-B6) going to a downstream field device control unit (C);
- field device ports (Pd1, Pd2, Pd3) configured and arranged for operatively connecting the field device control unit (C), in an interchangeable manner, to each of said plurality of field devices (D1-D5); and
- processing means (CPU) operatively connected to said first (Pb1) and second (Pb2) bus ports and said field device ports (Pd1, Pd2, Pd3), and programmed to process data coming therefrom in a manner which follows program instructions and at least depends on the kind of field device (D1-D5) operatively connected to the field device ports (Pd1, Pd2, Pd3).

3. The field device control unit according to claim 2, wherein said processing means (CPU) are adapted:
- to identify the field device (D1-D5) operatively connected to the field device ports (D1-D5), automatically or with the collaboration of the printer control unit (PE), and
- to re-program its program instructions to adapt its operation to the identified field device (D1-D5) operatively connected thereto, the processing means (CPU) being adapted to carry out said re-programming automatically or with the collaboration of the printer control unit (PE) or of another computing entity or interface connected to the field device control unit (C).

4. A printing system, comprising:
- a printing head (H) configured and arranged to print on a substrate as part of a printing process,
- at least one field device (D1-D5) configured and arranged to perform a further task of said printing process; and
- a distributed control system comprising:
- a printer control unit (PE) with computing capabilities, that is operatively connected to said printing head (H) to control the operation thereof;
- at least one field device control unit (C) with computing capabilities, that is operatively connected to said at least one field device (D1-D5) to control at least part of the operation thereof; and
- a fieldbus (B) interconnecting at least said printer control unit (PE) and said at least one field device control unit (C), wherein said fieldbus (B) provides a real-time communication between said printer control unit (PE) and said at least one field device control unit (C);
**characterized in that** the at least one field device control unit (C) is defined as the field device control unit of any of the previous claims, that is adapted to be operatively connected, in an interchangeable manner, to each of a plurality of field devices (D1-D5), each configured and arranged to perform a distinct task of said printing process, said plurality of field devices including said at least one field device (D1-D5).

5. The printing system according to claim 4, wherein said plurality of field devices (D1-D5) comprise at least two of the following field devices: a UV solidification or curing device, an ink supply hydraulic device, a camera or detector for printing validation and/or for detecting the presence of a predetermined to-be-printed area of the substrate, a light or acoustic indicator of the system status, a control input line device, a control output line device, a moving object speed and/or direction detector, a machine readable code reader device, a conveyor start/stop switch status device, and a PLC.

6. The printing system according to claim 4 or 5, comprising two or more field devices (D1-D5) of said at least one field device (D1-D5) and two or more respective field device control units (C) of said at least one field device control unit (C).

7. The printing system according to any of claims 4 to 6, wherein the fieldbus (B) interconnects the printer control unit (PE) and the at least one field device control unit (C) or two or more field device control units (C), according to a ring topology or a bus topology.

8. The printing system according to any of claims 4 to 7, wherein said fieldbus (B) comprises the following wire pairs:
- a first pair (P1), for power supplying at least the at least one field device control unit (C) or the two or more field device control units (C);
- a second pair (P2), for bidirectional data serial communication between the different components operatively connected to the fieldbus (B), including the printer control unit (PE) and the at least one field device control unit (C) or the two or more field device control units (C);
- a third pair (P3), for providing a synchronism signal to the different components operatively connected to the fieldbus (B), including the printer control unit (PE) and the at least one field device control unit (C) or the two or more field device control units (C), to synchronize the operations thereof; and
- a fourth pair (P4), for providing said real-time communication by means of a real-time bidirectional transmission of electrical signals representative of real-time events associated to any of the printer control unit (PE), the at least one field device control unit (C) or the two or more field device control units (C).

9. The printing system according to claim 8, wherein the fieldbus (B) further comprises a fifth wire pair (P5), for bidirectional data communication with further field devices, or with a further printer control unit (PE) connected to the same fieldbus (B) or to a further fieldbus to synchronize the operation of the printing heads and field devices operatively connected to the fieldbus (B) or fieldbuses, for carrying out a common printing process or individual but synchronized printing processes.

10. The printing system according to claim 8 or 9, wherein said fourth pair (P4) is configured and arranged for the multiplexed transmission of several of said electrical signals corresponding to different real-time events.

11. The printing system according to any of claims 8 to 10, wherein the printer control unit (PE) is configured and arranged to identify, from information sent and received through said second pair (P2) to/from any of the at least one field device control unit (C) or of the two or more field device control units (C), a specific field device (D1-D5) operatively connected thereto.

12. The printing system according to claim 11, wherein the printer control unit (PE) is configured and arranged to transmit, through said second pair (P2), program instructions data to any of the at least one field device control unit (C) or of the two or more field device control units (C), to program or re-program the same to adapt its operation to the identified field device (D1-D5) operatively connected thereto.

13. The printing system according to claim 11 or 12, wherein the printer control unit (PE) is configured and arranged to transmit, through said second pair (P2), different types of data to any of the at least one field device control unit (C) or of the two or more field device control units (C), to at least one of:
- assigning an identifier to the same,
- configuring the same for operating, for the real-time bidirectional transmission through the fourth pair (P4) or for the provision of said synchronism signal through the third pair (P3), and the associated synchronized components operations, as a master or as a slave, depending on which kind of field device is the identified field device (D1-D5), and
- power supplying, through the first pair (P1), a field device control unit (C) connected downstream to the fieldbus (B), from the power supply received from the printer control unit (PE), also from the first pair (P1).

14. The printing system according to claim 13 when depending on claim 5, wherein said substrate is a moving object, and wherein the printer control unit (PE) is configured and arranged to configure as a master the field device control unit (C) to which the identified field device (D1-D5) is operatively connected and as slaves the rest of components operatively connected to the fieldbus (B), for the provision of the synchronism signal through the third pair (P3) and associated synchronized components operations, when the identified field device (D1-D5) is a detector arranged for detecting the moving object speed and direction.

15. The printing system according to claim 13 or 14 when depending on claim 5, wherein the printer control unit (PE) is configured and arranged to configure as a master the field device control unit (C) to which the identified field device is operatively connected, for the real-time bidirectional transmission through the fourth pair (P4), when the identified field device (D1-D5) is a detector arranged for printing validation and/or for detecting the presence of a predetermined to-be-printed area of the substrate.

## Patentansprüche

1. Feldgerät-Steuereinheit für ein Drucksystem, wobei die Feldgerät-Steuereinheit als wenigstens eine Feldgerät-Steuereinheit (C) mit Rechenleistung definiert ist, die so konfiguriert ist, dass sie mit wenigstens einem Feldgerät (D1-D5) betriebstechnisch verbunden ist, um wenigstens einen Teil des Betriebs desselben zu steuern, wobei die wenigstens eine Feldgerät-Steuereinheit (C) so ausgelegt ist, dass sie austauschbar mit jedem der mehreren Feldgeräte (D1-D5) betriebstechnisch verbunden ist, wovon jedes konfiguriert und eingerichtet ist, eine bestimmte Aufgabe eines Druckverfahrens auszuführen, wobei die mehreren Feldgeräte wenigstens ein Feldgerät (D1-D5) umfassen;
wobei das Drucksystem umfasst:
- einen Druckkopf (H), der konfiguriert und eingerichtet ist, als Teil eines Druckverfahrens auf ein Substrat zu drucken,
- wobei das wenigstens eine Feldgerät (D1-D5) konfiguriert und eingerichtet ist, eine weitere Aufgabe des Druckverfahrens auszuführen, und
- ein verteiltes Steuersystem, umfassend:
- eine Drucker-Steuereinheit (PE) mit Rechenleistung, die mit dem Druckkopf (H) betriebstechnisch verbunden ist, um dessen Betrieb zu steuern;
- die wenigstens eine Feldgerät-Steuereinheit (C) mit Rechenleistung, die mit dem wenigstens einen Feldgerät (D1-D5) betriebstechnisch verbunden ist, um wenigstens einen Teil des Betriebs zu steuern; und
- einen Feldbus (B), der die wenigstens eine Drucker-Steuereinheit (PE) und die wenigstens eine Feldgerät-Steuereinheit (C) miteinander verbindet, wobei der Feldbus (B) eine Echtzeitkommunikation zwischen der Drucker-Steuereinheit (PE) und der wenigstens einen Feldgerät-Steuereinheit (C) bereitstellt.

2. Feldgerät-Steuereinheit nach Anspruch 1, umfassend:
- einen ersten (Pb1) und einen zweiten (Pb2) Busanschluss, die konfiguriert und eingerichtet sind, die Feldgerät-Steuereinheit (C) mit dem Feldbus (B) betriebstechnisch zu verbinden, wobei der erste Busanschluss (Pb1) mit einem Feldbussegment (B1-B5), das von der Drucker-Steuereinheit (PE) oder von einer vorgelagerten Feldgerät-Steuereinheit (C) kommt, und der zweite Busanschluss (Pb2) mit einem Feldbussegment (B2-B6), das zu einer nachgeschalteten Feldgerät-Steuereinheit (C) geht, verbunden ist,
- Feldgerät-Anschlüsse (Pd1, Pd2, Pd3), die konfiguriert und eingerichtet sind, die Feldgerät-Steuereinheit (C) austauschbar mit jedem der mehreren Feldgeräte (D1-D5) betriebstechnisch zu verbinden, und
- Verarbeitungsmittel (CPU), die mit dem ersten (Pb1) und dem zweiten (Pb2) Busanschluss und den Feldgerät-Anschlüssen (Pd1, Pd2, Pd3) betriebstechnisch verbunden sind und programmiert sind, Daten, die von dort kommen, auf eine Weise zu verarbeiten, die Programmanweisungen folgt und wenigstens von der Art des Feldgeräts (D1-D5), das mit den Feldgerät-Anschlüssen (Pd1, Pd2, Pd3) betriebstechnisch verbunden ist, abhängt.

3. Feldgerät-Steuereinheit nach Anspruch 2, wobei die Verarbeitungsmittel (CPU) ausgelegt sind:
- das Feldgerät (D1-D5), das mit den Feldgerät-Anschlüssen (D1-D5) betriebstechnisch verbunden ist, automatisch oder in Zusammenarbeit mit der Drucker-Steuereinheit (PE) zu identifizieren, und
- Programmanweisungen umzuprogrammieren, um dessen Betrieb auf das identifizierte Feldgerät (D1-D5), das betriebstechnisch damit verbunden ist, anzupassen, wobei die Verarbeitungsmittel (CPU) ausgelegt sind, die Umprogrammierung automatisch oder in Zusammenarbeit mit der Drucker-Steuereinheit (PE) oder mit einer anderen Computereinheit oder Schnittstelle, die mit der Feldgerät-Steuereinheit (C) verbunden ist, auszuführen.

4. Drucksystem, umfassend:
- einen Druckkopf (H), der konfiguriert und eingerichtet ist, als Teil eines Druckverfahrens auf ein Substrat zu drucken,
- wenigstens ein Feldgerät (D1-D5), das konfiguriert und eingerichtet ist, eine weitere Aufgabe des Druckverfahrens auszuführen, und
- ein verteiltes Steuersystem, umfassend:
- eine Drucker-Steuereinheit (PE) mit Rechenleistung, die mit dem Druckkopf (H) betriebstechnisch verbunden ist, um dessen Betrieb zu steuern;
- wenigstens eine Feldgerät-Steuereinheit (C) mit Rechenleistung, die mit dem wenigstens einen Feldgerät (D1-D5) betriebstechnisch verbunden ist, um wenigstens einen Teil von dessen Betrieb zu steuern; und
- einen Feldbus (B), der wenigstens die Drucker-Steuereinheit (PE) und die wenigstens eine Feldgerät-Steuereinheit (C) miteinander verbindet, wobei der Feldbus (B) eine Echtzeitkommunikation zwischen der Drucker-Steuereinheit (PE) und der wenigstens einen Feldgerät-Steuereinheit (C) bereitstellt;
**dadurch gekennzeichnet, dass** die wenigstens eine Feldgerät-Steuereinheit (C) als die Feldgerät-Steuereinheit nach einem der vorhergehenden Ansprüche definiert ist, die so eingerichtet ist, dass sie austauschbar mit jedem der mehreren Feldgeräte (D1-D5) betriebstechnisch verbunden werden kann, wovon jedes konfiguriert und eingerichtet ist, eine bestimmte Aufgabe des Druckverfahrens auszuführen, wobei die mehreren Feldgeräte das wenigstens eine Feldgerät (D1-D5) umfassen.

5. Drucksystem nach Anspruch 4, wobei die mehreren Feldgeräte (D1-D5) wenigstens zwei der folgenden Feldgeräte umfassen: eine UV-Verfestigungs- oder Aushärtvorrichtung, eine hydraulische Tintenzufuhrvorrichtung, eine Kamera oder einen Detektor zur Druck-Validierung und/oder zum Detektieren des Vorhandenseins eines vorbestimmten zu bedruckenden Bereichs des Substrats, eine Licht- oder akustische Anzeige des Systemstatus, eine Steuereingangsleitungsvorrichtung, eine Steuerausgangsleitungsvorrichtung, einen Detektor für Geschwindigkeit und/oder Richtung eines sich bewegenden Objekts, eine Vorrichtung zum Lesen eines maschinenlesbaren Codes, eine Vorrichtung für den Status eines Start/Stopp-Schalters eines Förderers und eine SPS.

6. Drucksystem nach Anspruch 4 oder 5, umfassend zwei oder mehr Feldgeräte (D1-D5) des wenigstens einen Feldgeräts (D1-D5) und zwei oder mehr entsprechende Feldgerät-Steuereinheiten (C) der wenigstens einen Feldgerät-Steuereinheit (C).

7. Drucksystem nach einem der Ansprüche 4 bis 6, wobei der Feldbus (B) die Drucker-Steuereinheit (PE) und die wenigstens eine Feldgerät-Steuereinheit (C) oder zwei oder mehr Feldgerät-Steuereinheiten (C) entsprechend einer Ring-Topologie oder einer Bus-Topologie miteinander verbindet.

8. Drucksystem nach einem der Ansprüche 4 bis 7, wobei der Feldbus (B) die folgenden Kabelpaare umfasst:
- ein erstes Paar (P1) zur Stromzufuhr wenigsten zu der wenigstens einen Feldgerät-Steuereinheit (C) oder zu den zwei oder mehr Feldgerät-Steuereinheiten (C),
- ein zweites Paar (P2) für eine serielle bidirektionale Datenkommunikation zwischen den verschiedenen Komponenten, die mit dem Feldbus (B) betriebstechnisch verbunden sind, einschließlich der Drucker-Steuereinheit (PE) und der wenigstens einen Feldgerät-Steuereinheit (C) oder der zwei oder mehr Feldgerät-Steuereinheiten (C);
- ein drittes Paar (P3) zum Bereitstellen eines Synchronisierungssignals für die verschiedenen Komponenten, die mit dem Feldbus (B) betriebstechnisch verbunden sind, einschließlich der Drucker-Steuereinheit (PE) und der wenigstens einen Feldgerät-Steuereinheit (C) oder der zwei oder mehr Feldgerät-Steuereinheiten (C), um deren Betrieb zu synchronisieren, und
- ein viertes Paar (P4) zum Bereitstellen der Echtzeitkommunikation mittels einer bidirektionalen Echtzeitübertragung von elektrischen Signalen, die für Echtzeitereignisse repräsentativ sind, die der Drucker-Steuereinheit (PE), der wenigstens einen Feldgerät-Steuereinheit (C) und/oder den zwei oder mehr Feldgerät-Steuereinheiten (C) zugeordnet sind.

9. Drucksystem nach Anspruch 8, wobei der Feldbus (B) ferner ein fünftes Kabelpaar (P5) für bidirektionale Datenkommunikation mit weiteren Feldgeräten oder mit einer weiteren Drucker-Steuereinheit (PE), die mit demselben Feldbus (B) oder mit einem weiteren Feldbus verbunden ist, umfasst, um den Betrieb der Druckköpfe und der Feldgeräte, die mit dem Feldbus (B) oder den Feldbussen betriebstechnisch verbunden sind, zu synchronisieren, um ein gemeinsames Druckverfahren oder individuelle, jedoch synchronisierte Druckverfahren auszuführen.

10. Drucksystem nach Anspruch 8 oder 9, wobei das vierte Paar (P4) für die multiplexe Übertragung mehrerer der elektrischen Signale, die unterschiedlichen Echtzeitereignissen entsprechen, konfiguriert und eingerichtet ist.

11. Drucksystem nach einem der Ansprüche 8 bis 10, wobei die Drucker-Steuereinheit (PE) konfiguriert und eingerichtet ist, aus Informationen, die durch das zweite Paar (P2) zu/von irgendeiner der wenigstens einen Feldgerät-Steuereinheiten (C) oder der zwei oder mehr Feldgerät-Steuereinheiten (C) gesendet und empfangen werden, ein bestimmtes Feldgerät (D1-D5) zu identifizieren, das betriebstechnisch mit dieser verbunden ist.

12. Drucksystem nach Anspruch 11, wobei die Drucker-Steuereinheit (PE) konfiguriert und eingerichtet ist, durch das zweite Paar (P2) Programmanweisungsdaten an irgendeine der wenigstens einen Feldgerät-Steuereinheit (C) oder der zwei oder mehr Feldgerät-Steuereinheiten (C) zu übertragen, um diese zu programmieren oder umzuprogrammieren, um deren Betrieb auf das identifizierte Feldgerät (D1-D5) anzupassen, das betriebstechnisch mit dieser verbunden ist.

13. Drucksystem nach Anspruch 11 oder 12, wobei die Drucker-Steuereinheit (PE) konfiguriert und eingerichtet ist, durch das zweite Paar (P2) unterschiedliche Datentypen an irgendeine der wenigstens einen Feldgerät-Steuereinheit (C) oder der zwei oder mehr Feldgerät-Steuereinheiten (C) zu übertragen, um wenigstens eines auszuführen von:
- Zuweisen einer Kennzeichnung derselben,
- Konfigurieren derselben zum Betreiben für die bidirektionale Echtzeitübertragung durch das vierte Paar (P4) oder zum Bereitstellen des Synchronisierungssignals durch das dritte Paar (P3) und der zugehörigen synchronisierten Komponentenvorgänge, als ein Master oder ein Slave, in Abhängigkeit davon, welche Art Feldgerät das identifizierte Feldgerät (D1-D5) ist, und
- Zuführen von Strom durch das erste Paar (P1) zu einer Feldgerät-Steuereinheit (C), die nachgelagert zum Feldbus (B) angeschlossen ist, von der Stromversorgung, die von der Drucker-Steuereinheit (PE), ebenfalls vom ersten Paar (P1), erhalten wird.

14. Drucksystem nach Anspruch 13, wenn dieser von Anspruch 5 abhängt, wobei das Substrat ein sich bewegendes Objekt ist, und wobei die Drucker-Steuereinheit (PE) konfiguriert und eingerichtet ist, die Feldgerät-Steuereinheit (C), mit dem das identifizierte Feldgerät (D1-D5) betriebstechnisch verbunden ist, als ein Master und den Rest der Komponenten, die mit dem Feldbus (B) betriebstechnisch verbunden sind, als Slaves zu konfigurieren, um das Synchronisierungssignal und zugehörige synchronisierte Komponentenvorgänge durch das dritte Paar (P3) bereitzustellen, wenn das identifizierte Feldgerät (D1-D5) ein Detektor ist, der zum Detektieren der Geschwindigkeit und Richtung des sich bewegenden Objekts eingerichtet ist.

15. Drucksystem nach Anspruch 13 oder 14, wenn diese von Anspruch 5 abhängen, wobei die Drucker-Steuereinheit (PE) konfiguriert und eingerichtet ist, die Feldgerät-Steuereinheit (C), mit der das identifizierte Feldgerät betriebstechnisch verbunden ist, für die bidirektionale Echtzeit-Übertragung durch das vierte Paar (P4) als ein Master zu konfigurieren, wenn das identifizierte Feldgerät (D1-D5) ein Detektor ist, der zur Druck-Validierung und/oder zum Detektieren des Vorhandenseins eines vorbestimmten zu bedruckenden Bereichs des Substrats eingerichtet ist.

## Revendications

1. Unité de commande de dispositif de terrain pour un système d'impression, dans laquelle l'unité de commande de dispositif de terrain est définie comme au moins une unité de commande de dispositif de terrain (C) avec des capacités de calcul, qui est configurée pour être connectée de manière opérationnelle à au moins un dispositif de terrain (D1-D5) afin de commander au moins une partie du fonctionnement de celui-ci, dans laquelle la au moins une unité de commande de dispositif de terrain (C) est adaptée pour être connectée de manière opérationnelle, de manière interchangeable, à chacun d'une pluralité de dispositifs de terrain (D1-D5), chacun étant configuré et agencé pour effectuer une tâche distincte d'un processus d'impression, ladite pluralité de dispositifs de terrain comprenant ledit au moins un dispositif de terrain (D1-D5) ;
dans laquelle ledit système d'impression comprend :
- une tête d'impression (H) configurée et agencée pour imprimer sur un substrat dans le cadre d'un processus d'impression,
- ledit au moins un dispositif de champ (D1-D5) configuré et agencé pour exécuter une autre tâche dudit processus d'impression ; et
- un système de commande distribué, comprenant :
- une unité de commande d'imprimante (PE) avec des capacités de calcul, qui est connectée de manière opérationnelle à ladite tête d'impression (H) pour commander le fonctionnement de celle-ci ;
- ladite au moins une unité de commande de dispositif de terrain (C) avec des capacités de calcul, qui est connectée de manière opérationnelle audit au moins un dispositif de terrain (D1-D5) afin de commander au moins une partie du fonctionnement de celui-ci ; et
- un bus de terrain (B) interconnectant au moins ladite unité de commande d'imprimante (PE) et ladite au moins une unité de commande de dispositif de terrain (C), dans laquelle ledit bus de terrain (B) fournit une communication en temps réel entre ladite unité de commande d'imprimante (PE) et ladite au moins une unité de commande de dispositif de terrain (C).

2. Unité de commande de dispositif de terrain selon la revendication 1, comprenant :
- des premier (Pb1) et second (Pb2) ports de bus configurés et agencés pour connecter de manière opérationnelle l'unité de commande de dispositif de terrain (C) au bus de terrain (B), ledit premier port de bus (Pb1) à un segment de bus de terrain (B1-B5) provenant de l'unité de commande d'imprimante (PE) ou d'une unité de commande de dispositif de terrain en amont (C) et ledit second port de bus (Pb2) à un segment de bus de terrain (B2-B6) allant à une unité de commande d'appareil de terrain en aval (C) ;
- des ports de dispositif de terrain (Pd1, Pd2, Pd3) configurés et agencés pour connecter opérationnellement l'unité de commande de dispositif de terrain (C), d'une manière interchangeable, à chacun de ladite pluralité de dispositifs de terrain (D1-D5) ; et
- des moyens de traitement (CPU) connectés de manière opérationnelle auxdits premier (Pb1) et second (Pb2) ports de bus et auxdits ports de dispositif de champ (Pd1, Pd2, Pd3), et programmés pour traiter des données provenant de ceux-ci d'une manière qui suit des instructions de programme et qui dépend au moins du type de dispositif de champ (D1-D5) connecté de manière opérationnelle aux ports de dispositif de champ (Pd1, Pd2, Pd3).

3. Unité de commande de dispositif de terrain selon la revendication 2, dans laquelle lesdits moyens de traitement (CPU) sont adaptés :
- pour identifier le dispositif de terrain (D1-D5) connecté de manière opérationnelle aux ports de dispositif de terrain (D1-D5), automatiquement ou avec la collaboration de l'unité de commande d'imprimante (PE), et
- pour reprogrammer ses instructions de programme afin d'adapter son fonctionnement au dispositif de terrain identifié (D1-D5) connecté de manière opérationnelle à celui-ci, les moyens de traitement (CPU) étant adaptés pour effectuer ladite reprogrammation automatiquement ou avec la collaboration de l'unité de commande d'imprimante (PE) ou d'une autre entité ou interface informatique connectée à l'unité de commande de dispositif de terrain (C).

4. Système d'impression, comprenant :
- une tête d'impression (H) configurée et agencée pour imprimer sur un substrat dans le cadre d'un processus d'impression,
- au moins un dispositif de terrain (D1-D5) configuré et agencé pour exécuter une autre tâche dudit processus d'impression ; et
- un système de commande distribué, comprenant :
- une unité de commande d'imprimante (PE) avec des capacités de calcul, qui est connectée de manière opérationnelle à ladite tête d'impression (H) pour commander le fonctionnement de celle-ci ;
- au moins une unité de commande de dispositif de terrain (C) avec des capacités de calcul, connectée de manière opérationnelle audit au moins un dispositif de terrain (D1-D5) pour commander au moins une partie du fonctionnement de celui-ci ; et
- un bus de terrain (B) interconnectant au moins ladite unité de commande d'imprimante (PE) et ladite au moins une unité de commande de dispositif de terrain (C), dans lequel ledit bus de terrain (B) fournit une communication en temps réel entre ladite unité de commande d'imprimante (PE) et ladite au moins une unité de commande de dispositif de terrain (C) ;
**caractérisé en ce que** la au moins une unité de commande de dispositif de terrain (C) est définie comme l'unité de commande de dispositif de terrain selon l'une quelconque des revendications précédentes, qui est adaptée pour être connectée de manière opérationnelle, d'une manière interchangeable, à chacun d'une pluralité de dispositifs de terrain (D1-D5), chacun étant configuré et agencé pour réaliser une tâche distincte dudit processus d'impression, ladite pluralité de dispositifs de terrain comprenant ledit au moins un dispositif de terrain (D1-D5).

5. Système d'impression selon la revendication 4, dans lequel ladite pluralité de dispositifs de terrain (D1-D5) comprend au moins deux des dispositifs de champ suivants : un dispositif de solidification ou de durcissement UV, un dispositif hydraulique d'alimentation en encre, une caméra ou un détecteur pour la validation de l'impression et/ou pour détecter la présence d'une zone prédéterminée à imprimer du substrat, un indicateur lumineux ou acoustique de l'état du système, un dispositif de ligne d'entrée de commande, un dispositif de ligne de sortie de commande, un détecteur de vitesse et/ou de direction d'objet mobile, un dispositif de lecture de code lisible par machine, un dispositif d'état de commutateur de démarrage/arrêt de convoyeur, et un PLC.

6. Système d'impression selon la revendication 4 ou 5, comprenant deux ou plusieurs dispositifs de champ (D1-D5) dudit au moins un dispositif de terrain (D1-D5) et deux ou plusieurs unités de commande de dispositif de terrain respectives (C) de ladite au moins une unité de commande de dispositif de terrain (C).

7. Système d'impression selon l'une quelconque des revendications 4 à 6, dans lequel le bus de terrain (B) interconnecte l'unité de commande d'imprimante (PE) et la au moins une unité de commande de dispositif de terrain (C) ou deux ou plusieurs unités de commande de dispositif de terrain (C), selon une topologie en anneau ou une topologie en bus.

8. Système d'impression selon l'une quelconque des revendications 4 à 7, dans lequel ledit bus de terrain (B) comprend les paires de fils suivantes :
- une première paire (P1), pour alimenter en énergie au moins la au moins une unité de commande de dispositif de terrain (C) ou les deux ou plusieurs unités de commande de dispositif de terrain (C) ;
- une deuxième paire (P2), pour la communication bidirectionnelle de données en série entre les différents composants connectés de manière opérationnelle au bus de terrain (B), y compris l'unité de commande d'imprimante (PE) et l'au moins une unité de commande de dispositif de terrain (C) ou les deux ou plusieurs unités de commande de dispositif de terrain (C) ;
- une troisième paire (P3), pour fournir un signal de synchronisation aux différents composants connectés de manière opérationnelle au bus de terrain (B), y compris l'unité de commande d'imprimante (PE) et l'au moins une unité de commande de dispositif de terrain (C) ou les deux ou plusieurs unités de commande de dispositif de terrain (C), pour synchroniser leurs opérations ; et
- une quatrième paire (P4), pour fournir ladite communication en temps réel au moyen d'une transmission bidirectionnelle en temps réel de signaux électriques représentatifs d'événements en temps réel associés à l'une quelconque de l'unité de commande d'imprimante (PE), de la au moins une unité de commande de dispositif de terrain (C) ou des deux ou plusieurs unités de commande de dispositif de terrain (C).

9. Système d'impression selon la revendication 8, dans lequel le bus de terrain (B) comprend en outre une cinquième paire de fils (P5), pour la communication bidirectionnelle de données avec d'autres dispositifs de terrain, ou avec une autre unité de commande d'imprimante (PE) connectée au même bus de terrain (B) ou à un autre bus de terrain pour synchroniser le fonctionnement des têtes d'impression et des dispositifs de terrain connectés de manière opérationnelle au bus de terrain (B) ou aux bus de terrain, pour exécuter un processus d'impression commun ou des processus d'impression individuels mais synchronisés.

10. Système d'impression selon la revendication 8 ou 9, dans lequel ladite quatrième paire (P4) est configurée et agencée pour la transmission multiplexée de plusieurs desdits signaux électriques correspondant à différents événements en temps réel.

11. Système d'impression selon l'une quelconque des revendications 8 à 10, dans lequel l'unité de commande d'imprimante (PE) est configurée et agencée pour identifier, à partir d'informations envoyées et reçues par l'intermédiaire de ladite seconde paire (P2) vers/depuis l'une quelconque de la au moins une unité de commande de dispositif de champ (C) ou des deux ou plusieurs unités de commande de dispositif de champ (C), un dispositif de champ spécifique (D1-D5) connecté de manière opérationnelle à celle-ci.

12. Système d'impression selon la revendication 11, dans lequel l'unité de commande d'imprimante (PE) est configurée et agencée pour transmettre, par l'intermédiaire de ladite seconde paire (P2), des données d'instructions de programme à l'une quelconque de la au moins une unité de commande de dispositif de terrain (C) ou des deux ou plusieurs unités de commande de dispositif de terrain (C), pour programmer ou reprogrammer celle-ci afin d'adapter son fonctionnement au dispositif de terrain identifié (D1-D5) connecté de manière opérationnelle à celle-ci.

13. Système d'impression selon la revendication 11 ou 12, dans lequel l'unité de commande d'imprimante (PE) est configurée et agencée pour transmettre, par l'intermédiaire de ladite seconde paire (P2), différents types de données à l'une quelconque de la au moins une unité de commande de dispositif de terrain (C) ou des deux ou plusieurs unités de commande de dispositif de terrain (C), pour réaliser au moins l'une des opérations suivantes :
- leur attribuer un identifiant,
- les configurer pour qu'elles fonctionnent, pour la transmission bidirectionnelle en temps réel par l'intermédiaire de la quatrième paire (P4) ou pour la fourniture dudit signal de synchronisation par l'intermédiaire de la troisième paire (P3), et les opérations de composants synchronisés associées, en tant que maître ou en tant qu'esclave, selon le type de dispositif de terrain qui est le dispositif de terrain identifié (D1-D5), et
- alimenter, par l'intermédiaire de la première paire (P1), une unité de commande de dispositif de terrain (C) connectée en aval du bus de terrain (B), à partir de l'alimentation reçue de l'unité de commande d'imprimante (PE), également de la première paire (P1).

14. Système d'impression selon la revendication 13, lorsqu'elle dépend de la revendication 5, dans lequel ledit substrat est un objet mobile, et dans lequel l'unité de commande d'imprimante (PE) est configurée et agencée pour configurer l'unité de commande de dispositif de champ (C) à laquelle le dispositif de champ identifié (D1-D5) est connecté de manière opérationnelle en tant que maître et le reste des composants connectés de manière opérationnelle au bus de champ (B) en tant qu'auxiliaires, pour la fourniture du signal de synchronisation par l'intermédiaire de la troisième paire (P3) et des opérations de composants synchronisés associées, lorsque le dispositif de champ identifié (D1-D5) est un détecteur agencé pour détecter la vitesse et la direction de l'objet mobile.

15. Système d'impression selon la revendication 13 ou 14, lorsqu'elles dépendent de la revendication 5, dans lequel l'unité de commande d'imprimante (PE) est configurée et agencée pour configurer l'unité de commande de dispositif de champ (C) à laquelle le dispositif de champ identifié est connecté de manière opérationnelle, en tant que maître, pour la transmission bidirectionnelle en temps réel par l'intermédiaire de la quatrième paire (P4), lorsque le dispositif de champ identifié (D1-D5) est un détecteur agencé pour la validation de l'impression et/ou pour détecter la présence d'une zone prédéterminée à imprimer du substrat.
